# EUROPÄISCHE PATENTSCHRIFT

(11) **EP 0 632 096 B1**
(45) Veröffentlichungstag und Bekanntmachung des Hinweises auf die Patenterteilung: **20.12.1995**
(21) Anmeldenummer: 94109707.3
(22) Anmeldetag: 23.06.1994
(51) Int. Cl.: C08L 57/00, C09D 5/34, C04B 24/26

(54) **Redispergierbare Dispersionspulverzusammensetzung**
Redispersible dispersion powder composition
Composition de poudre dispersante pouvant être redispersée

(30) Priorität: 24.06.1993 DE 4321070
(43) Veröffentlichungstag der Anmeldung: 04.01.1995
(73) Patentinhaber: Wacker-Chemie GmbH, 81737 München (DE)
(72) Erfinder: Schulze, Joachim, Dr., D-84489 Burghausen (DE); Härzschel, Reinhard, Dr., D-84489 Burghausen (DE); Figge, Reiner, Dr., D-84539 Ampfing (DE)

(56) Entgegenhaltungen:
- EP-A- 0 477 900
- DE-A- 4 034 543

## Beschreibung

Die Erfindung betrifft eine redispergierbare Dispersionspulverzusammensetzung, welche aminofunktionellen Polyvinylalkohol enthält, und deren Verwendung in Baustoffen.

Dispersionspulver werden seit vielen Jahren gerade im Bausektor als Kunststoffvergütung von hydraulisch abbindenden Systemen eingesetzt. Wesentliche Verbesserungen in den Eigenschaften Haftung, Abriebsbeständigkeit, Kratzfestigkeit, Biegezugfestigkeit werden durch deren Zusatz erzielt. In vielen Fällen, wie zum Beispiel in der Betonsanierung, begründet die Erhöhung der Haftzugfestigkeit den Einsatz des Dispersionspulvers.

Dispersionspulver werden durch Sprühtrocknung wäßriger Polymerdispersionen unter Zusatz von Polyvinylalkohol und anderer Additive hergestellt. Das gut rieselfähige Pulver mit Teilchengrößen zwischen 10 und 250 »m redispergiert in Wasser wieder zur ursprünglichen Dispersion mit Teilchengrößen zwischen 0,1 und 5,0 »m. Die Redispersionen sollten auch über einen längeren Zeitraum stabil sein, d. h. sie sollten nicht zum Absitzen neigen.

Der große Vorteil von Dispersionspulvern gegenüber den gleichfalls alternativ einsetzbaren flüssigen Dispersionen ist, daß man Trockenmörtelmischungen herstellen kann, die an der Baustelle nur noch mit Wasser angemischt werden müssen.

Das bringt viele Vorteile wie erhöhte Arbeitssicherheit, sichere Handhabung und einfache Gebindeentsorgung. Solche Dispersionspulver sind beispielsweise in der EP-A 228657 (US-A 4704416) oder der DE-A 2049114 (US-A 3784648) beschrieben. Die DE-A 4030638 (US-A 5118751) beschreibt den Einsatz vollverseifter Copolymere aus 1-Alkylvinylester und Vinylester in Dispersionspulvern. Nachteilig bei diesen bisher bekannten Dispersionspulvern ist, daß deren Zusatz zu Baustoffen wie Betonsanierungsmörteln oder Bauklebern in vielen Fällen die Haftzugfestigkeit nicht im erwünschten Maß erhöht.

Der Erfindung lag daher die Aufgabe zugrunde, redispergierbare Dispersionspulverzusammensetzungen zur Verfügung zu stellen, deren Zusatz die Haftzugfestigkeit der Baustoffe verbessert, ohne die Vorteile, die der Zusatz von Dispersionspulver erbringt, wie verbesserte Abriebsbeständigkeit, Kratzfestigkeit und Verarbeitung zu verlieren.

Überraschend wurde nun gefunden, daß diese Aufgabe durch den Einbau eines aminofunktionellen Polyvinylalkohols in das Dispersionspulver gelöst werden kann. Die DE-A 4034543 (US-A 5155167), US-A 2748103 und EP-A 339371 beschreiben die Herstellung von aminofunktionellen Polyvinylalkoholen. Über die Verwendung in Dispersionspulvern wird nicht berichtet.

Gegenstand der Erfindung ist eine redispergierbare Dispersionspulverzusammensetzung enthaltend
a) ein Basispolymerisat aus der Gruppe der Vinylester-Polymerisate, Styrol-Polymerisate, Acrylat-Polymerisate und Vinylchlorid-Polymerisate,
b) 2 bis 15 Gew%, bezogen auf das Basispolymerisat, Polyvinylalkohol mit einem Hydrolysegrad von 85 bis 95 Mol% und einer Höppler-Viskosität von 2 bis 25 mPa.s,
c) 3 bis 30 Gew%, bezogen auf das Gesamtgewicht polymerer Bestandteile, feines Antiblockmittel, und
d) 1 bis 15 Gew%, bezogen auf das Basispolymerisat, kaltwasserlöslichen, aminofunktionellen Polyvinylalkohol mit einer Höppler-Viskosität von 1 bis 20 mPa.s und einer Verseifungszahl von 0 bis 250, welcher aminofunktionelle Vinyleinheiten der Formel CH₂=CH-(CH₂)ₓ-NH₂ mit x = 0 bis 4 enthält.

Als Basispolymerisat geeignete Vinylester-Polymerisate sind Vinylacetat-Homopolymere; Copolymere des Vinylacetats mit Ethylen und/oder Vinylchlorid und/oder weiteren Vinylestern, wie Vinyllaurat, Versaticsäurevinylestern, Vinylpivalat und/oder Estern von Maleinsäure/Fumarsäure; oder Homopolymerisate von Vinylestern von gesättigten C₃- bis C₈-Alkylcarbonsäuren oder deren Copolymerisate mit Ethylen, Vinylchlorid und/oder weiteren Vinylestern. Die (Meth)Acrylat- und/oder Styrol-(Co)-Polymerisate leiten sich ab von Polymerisaten aus Styrol und/oder Estern der Acrylsäure und/oder Methacrylsäure (hier als (Meth)Acrylat bezeichnet) mit geradkettigen, verzweigten oder cyclischen aliphatischen Alkoholen mit 1 bis 20 C-Atomen. Weitere Styrol-(Co)-Polymerisate können Styrol-Butadien-Copolymerisate sein. Als Vinylchlorid-Polymerisate sind Vinylchlorid-Ethylen-Copolymere geeignet.

Vorzugsweise eingesetzt werden Vinylacetat-Homopolymere, Vinylacetat-Ethylen-Copolymere oder Copolymere von Vinylestern von gesättigten C₃- bis C₈-Alkylcarbonsäuren und Ethylen, mit einem Ethylengehalt von 1 bis 40 Gew% Ethylen und 0 bis 40 Gew% weiterer Vinylester aus der Gruppe der Vinylester von gesättigten C₃- bis C₈-Alkylcarbonsäuren und/oder Vinylchlorid; Styrol-Acrylate wie Styrol-Butylacrylat oder Styrol-Ethylhexylacrylat mit einem Styrolgehalt von 1 bis 70 Gew%.

Als Komponente b) werden vorzugsweise Polyvinylalkohole mit einem Hydrolysegrad von 85 bis 94 Mol% und einer Höppler-Viskosität, bestimmt in 4%-iger Lösung, von 3 bis 25 mPa.s eingesetzt.

Der Anteil an Antiblockmittel c) beträgt vorzugsweise 4 bis 20 Gew%. Besonders bevorzugt sind Antiblockmittel mit mittleren Teichengrößen von 0,1 bis 50 »m. Beispiele für Antiblockmittel sind fein gemahlene Aluminiumsilikate, Kieselgur, pyrogen erzeugtes Siliziumdioxyd, Fällungskieselsäure, kolloidales Silicagel, Micro-Silica, Leichtspat, Kaolin, Talkum, Zemente, Diatomeenerde, Calciumcarbonat oder Magnesiumhydrosilikate.

Der kaltwasserlösliche, aminofunktionelle Polyvinylalkohol d) kann durch die Höppler-Viskosität (gemessen als 4%-ige Lösung) und die Verseifungszahl VZ (VZ = Verbrauch von mg KOH / 1g Substanz) charakterisiert werden. Die Verseifungszahl umfaßt die Summe der Anteile an Vinylacetat- und Isopropenylacetat-Einheiten. Vorzugsweise enthält die Dispersionspulverzusammensetzung kaltwasserlöslichen, aminofunktionellen Polyvinylalkohol mit einer Höppler-Viskosität von 2 bis 15 mPa.s und einer Verseifungszahl VZ von 2 bis 250, besonders bevorzugt 2 bis 160.

In einer besonders bevorzugten Ausführungsform ist der kaltwasserlösliche, aminofunktionelle Polyvinylalkohol d) ein Polymer, welches
0 bis 20 Mol%, insbesonders 0,1 bis 15 Mol%, Vinylacetat,
35 bis 95 Mol%, insbesonders 70 bis 95 Mol%, Vinylalkohol,
1 bis 15 Mol%, insbesonders 2 bis 10 Mol%, aminofunktionelle Vinyleinheiten der Formel CH₂=CH-(CH₂)ₓ-NH₂ mit x = 0 bis 4,
am meisten bevorzugt ist x = 1 (Allylamin),
0 bis 30 Mol%, insbesonders 2 bis 20 Mol%, 1-Methylvinylalkohol und
0 bis 5 Mol%, insbesonders 0,01 bis 3,0 Mol%, 1-Methylvinylacetat enthält, wobei sich die Angaben in Mol% jeweils auf 100 Mol% aufaddieren.

Die Summe der Molanteile von 1-Methylvinylalkohol (Isopropenylalkohol) und 1-Methylvinylacetat (Isopropenylacetat) sollte dabei in einer bevorzugten Ausführungsform 30 Mol%, besonders bevorzugt 25 Mol%, nicht übersteigen. Die Herstellung des kaltwasserlöslichen, aminofunktionellen Polyvinylalkohols d) kann nach den Verfahren aus den bereits genannten Publikationen DE-A 4034543 (US-A 5155167), US-A 2748103 und EP-A 339371 erfolgen.

Vorzugsweise enthält die Dispersionspulverzusammensetzung kaltwasserlöslichen, aminofunktionellen Polyvinylalkohol in einer Menge von 1 bis 10 Gew%, bezogen auf das Basispolymerisat.

Die Dispersionspulverzusammensetzung kann gegebenenfalls noch weitere Zusatzstoffe enthalten.

So können noch bis 30 Gew%, bezogen auf das Basispolymerisat, Zementverflüssiger, bevorzugt sulfonatgruppenhaltige Kondensationsprodukte aus Melamin oder Keton und Formaldehyd und/oder Naphtalinsulfonsäure-Formaldehyd- und/oder Phenolsulfonat-Formaldehyd-Kondensationsprodukte enthalten sein.

Gegebenenfalls können auch noch bis 10 Gew%, bezogen auf das Basispolymerisat, vollverseifte Copolymere aus 1-Alkylvinylester mit C₁- bis C₄-Alkylgruppen und Vinylester mit einer Höppler-Viskosität von 1 bis 25 mPa.s, bestimmt in 4%-iger Lösung, enthalten sein. Das vollverseifte Copolymer enthält vorzugsweise Vinylacetat und 5 bis 25 Mol% 1-Alkylvinylester, wobei besonders bevorzugt der 1-Alkylvinylester Isopropenylacetat ist.

Gegebenenfalls können auch noch bis 2 Gew%, bevorzugt bis 1 Gew%, bezogen auf das Basispolymerisat, oberflächenaktive Substanz(en) wie Emulgatoren oder Netzmittel enthalten sein. Beispiele hierfür sind anionische Tenside sowie nichtionische Tenside, beispielsweise Alkylpolyglykole bzw. Ethylenoxid-Propylenoxid-Copolymere.

Gegebenenfalls können auch noch bis 3 Gew%, bezogen auf das Basispolymerisat, Verdickungsmittel, zum Beispiel auf Basis Polyacrylsäure, enthalten sein.

Gegebenenfalls können auch noch bis 2 Gew%, bezogen auf das Basispolymerisat, Entschäumer enthalten sein. Geeignete Entschäumer sind die am Markt erhältlichen Produkte, die sich für den Einsatz in hydraulisch abbindenden Systemen bewährt haben. Beispiele sind Silicon-Entschäumer oder Entschäumer auf Basis von flüssigen Kohlenwasserstoffen.

Zur Herstellung der Redispersionspulverzusammensetzung wird das Basispolymerisat a) als wäßrige Dispersion eingesetzt. Dieser Dispersion wird die Polyvinylalkoholkomponente b) zugesetzt. Vorzugsweise wird eine wäßrige Lösung eingesetzt, wobei sich über die verwendete Wassermenge die Viskosität der Dispersion steuern läßt. Aminofunktioneller Polyvinylalkohol d) wird vorzugsweise in wäßriger Lösung eingesetzt und wird als solche in die Dispersion eingemischt. Diese Mischvorgänge können in beliebiger Reihenfolge ablaufen, wichtig ist nur, daß eine homogene Dispersions-Mischung vorliegt. Die gegebenenfalls einzusetzenden Zementverflüssiger, vollverseifte 1-Alkylvinylester/Vinylester-Copolymere, Verdickungsmittel, oberflächenaktive Substanzen, Entschäumer sowie gegebenenfalls weitere Zusatzstoffe werden vorzugsweise vor der Trocknung dem in Dispersion vorliegenden Gemisch zugegeben. Es ist aber auch möglich diese später einzumischen.

Nach Vermischung der Komponenten wird die Dispersion getrocknet, vorzugsweise sprüh- oder gefriergetrocknet, besonders bevorzugt sprühgetrocknet. Hierbei kann auf bekannte Vorrichtungen, wie z.B. Versprühen durch Mehrstoffdüsen oder mit der Scheibe in einem gegebenenfalls erhitzten Trockengasstrom zurückgegriffen werden. Im allgemeinen werden Temperaturen über 250°C nicht angewendet. Die optimale Temperatur des Trockengases kann in wenigen Versuchen ermittelt werden; oft haben sich Temperaturen über 60°C besonders bewährt.

Zur Erhöhung der Lagerfähigkeit und um z.B. bei Pulvern mit niedriger Glasübergangstemperatur ein Verbacken und Verblocken zu verhindern wird das erhaltene Pulver mit dem Antiblockmittel (Antibackmittel) c) versetzt. Dies erfolgt vorzugsweise solange das Pulver noch fein verteilt ist, z.B. noch im Trockengas suspendiert ist. Insbesondere wird das Antibackmittel getrennt aber gleichzeitig mit der Dispersion in die Trocknungsvorrichtung dosiert.

Die erfindungsgemäße Dispersionspulverzusammensetzung eignet sich besonders zum Einsatz in Baustoffen, wie Fliesenkleber, Spachtelmassen, Gipsbaustoffen, Kalkmörteln, Zementmörteln, Putzen und insbesonders Trockenmörtel, und führt dort im Vergleich zu einem entsprechenden Dispersionspulver, das keinen aminofunktionellen Polyvinylalkohol enthält, zu einer erhöhten Haftzugfestigkeit des Mörtels. Die Zusammensetzung solcher hydraulisch abbindender Baustoffe ist an sich bekannt. Die Grundlage dieser Massen bilden das hydraulische Bindemittel und Füllstoffe vorzugsweise im Gewichtsverhältnis von 1 : 10 bis 1 : 1. Beispiele für hydraulische Bindemittel sind Portlandzement, Tonerdeschmelzzement, Gips oder Anhydrit bzw. Mischungen davon. Als Füllstoff wird vorzugsweise Quarzsand, insbesonders in einer Körnung von 0,1 bis 4,0 mm oder Calciumcarbonat bzw. Mischungen davon eingesetzt. Gebräuchliche Zusatzstoffe in solchen Massen sind außerdem noch Zementverflüssiger. Bezogen auf das Trockengewicht, beispielsweise des Trockenmörtels, beträgt die zuzusetzende Menge der erfindungsgemäßen Dispersionspulverzusammensetzung vorzugsweise zwischen 0,5 und 10 Gew%. Vor der Applikation wird der mit der Dispersionspulverzusammensetzung modifizierte Trockenmörtel mit Wasser angerührt. Die Wassermenge ist dabei abhängig von der Zusammensetzung der Baustoffe.

Die erfindungsgemäße Dispersionspulverzusammensetzung kann mit Erfolg auch als Bindemittel in Klebstoffzusammensetzungen oder Anstrichfarben eingesetzt werden.

Die folgenden Beispiele zeigen den keineswegs vorhersehbaren technischen Vorteil der erfindungsgemäßen redispergierbaren Dispersionspulverzusammensetzung.

### Beispiele:

### Verwendete Substanzen:

### Dispersion LL 1

Mit Polyvinylalkohol stabilisierte wäßrige Dispersion mit einem Festgehalt von 50 % auf der Basis eines Vinylacetat-Ethylen-Copolymers mit einem Vinylacetatgehalt von 78 Gew% und einem Ethylengehalt von 22 Gew% der Wacker-Chemie GmbH.

### Dispersion LL 2

Mit Polyvinylalkohol stabilisierte wäßrige Dispersion mit einem Festgehalt von 50 % auf Basis eines Ethylen-Vinylchlorid-Vinyllaurat-Terpolymerlsats mit einem Ethylengehalt von 17 Gew%, einem Vinylchloridgehalt von 70 Gew% und einem Vinyllauratgehalt von 13 Gew% der Wacker-Chemie GmbH.

### Dispersion LL 3

Mit Polyvinylalkohol stabilisierte wäßrige Dispersion mit einem Festgehalt von 50 % auf der Basis eines Styrol-Acrylat-Copolymers mit einem Styrolgehalt von 50 Gew% und einem Butylacrylatgehalt von 50 Gew% der Wacker-Chemie GmbH.

### Polyviol M 13/140

Polyvinylalkohol mit einer Höppler-Viskosität von 13 mPa.s, in 4%-iger Lösung, und einer Verseifungszahl von 140 (= Hydrolysegrad von 88 Mol%) der Wacker-Chemie GmbH.

### Polyviol G 04/140

Polyvinylalkohol mit einer Höppler-Viskosität von 4 mPa.s, in 4%-iger Lösung, und einer Verseifungszahl von 140 (= Hydrolysegrad von 88 Mol%) der Wacker-Chemie GmbH.

### PME

Vollverseiftes Copolymer aus Isopropenylacetat und Vinylacetat (Abk. PME) mit einer Höppler-Viskosität von 2,5 mPa.s, in 4%-iger Lösung, und einem Isopropenylacetatanteil von 20 Mol% der Wacker-Chemie GmbH

### Agitan 305

Entschäumer auf Basis von flüssigen Kohlenwasserstoffen der Fa. Münzing Heilbronn.

### Aminofunktioneller PVAl

### N-PVAl 1:

Aminofunktioneller Polyvinylalkohol mit 87,5 Mol% Vinylalkohol, 9 Mol% Isopropenylalkohol, 2,5 Mol% Allylamin und insgesamt 1 Mol% Vinylacetat bzw. Isopropenylacetat-Einheiten. Der Polyvinylalkohol hat eine Höppler-Viskosität (4%-ige wäßrige Lösung) von 8 mPa.s und eine Verseifungszahl von 6.

### N-PVAl 2:

Aminofunktioneller Polyvinylalkohol mit 89,6 Mol% Vinylalkohol, 6 Mol% Isopropenylalkohol, 3,4 Mol% Allylamin und insgesamt 1 Mol% Vinylacetat bzw. Isopropenylacetat-Einheiten. Der Polyvinylalkohol hat eine Höppler-Viskosität (4%-ige wäßrige Lösung) von 4,1 mPa.s und eine Verseifungszahl von 8.

### N-PVAl 3:

Aminofunktioneller Polyvinylalkohol mit 87,5 Mol% Vinylalkohol, 9 Mol% Isopropenylalkohol, 2,5 Mol% Allylamin und insgesamt 1 Mol% Vinylacetat bzw. Isopropenylacetat-Einheiten. Der Polyvinylalkohol hat eine Höppler-Viskosität (4%-ige wäßrige Lösung) von 2,3 mPa.s und eine Verseifungszahl von 6.

### N-PVAl 4:

Aminofunktioneller Polyvinylalkohol mit 85,0 Mol% Vinylalkohol, 7 Mol% Isopropenylalkohol, 7 Mol% Allylamin und insgesamt 1 Mol% Vinylacetat bzw. Isopropenylacetat-Einheiten. Der Polyvinylalkohol hat eine Höppler-Viskosität (4%-ige wäßrige Lösung) von 3,3 mPa.s und eine Verseifungszahl von 9.

### N-PVAl 5:

Aminofunktioneller Polyvinylalkohol mit 87,0 Mol% Vinylalkohol, 7 Mol% Isopropenylalkohol, 5 Mol% Allylamin und insgesamt 1 Mol% Vinylacetat bzw. Isopropenylacetat-Einheiten. Der Polyvinylalkohol hat eine Höppler-Viskosität (4%-ige wäßrige Lösung) von 3,6 mPa.s und eine Verseifungszahl von 7.

### N-PVAl 6:

Aminofunktioneller Polyvinylalkohol mit 95,0 Mol% Vinylalkohol, 4 Mol% Allylamin und 1 Mol% Vinylacetat-Einheiten. Der Polyvinylalkohol hat eine Höppler-Viskosität (4%-ige wäßrige Lösung) von 3,6 mPa.s und eine Verseifungszahl von 8.

### N-PVAl 7:

Aminofunktioneller Polyvinylalkohol mit 84,0 Mol% Vinylalkohol, 4 Mol% Allylamin und 12 Mol% Vinylacetat-Einheiten. Der Polyvinylalkohol hat eine Höppler-Viskosität (4%-ige wäßrige Lösung) von 3,2 mPa.s und eine Verseifungszahl von 114.

### Beispiel 1:

4000 Gew.Teile Vinnapas-Dispersion LL 1, 2000 Gew.Teile Polyviol M 13/140 als 10 %-ige Lösung in Wasser (10 % auf LL 1 Harz), 10 Gew.Teile Agitan 305 (0,5 % auf LL 1 Harz), 800 Gew.Teile N-PVAl 1 als 10 %-ige Lösung in Wasser (4 % auf LL 1 Harz) und 500 Gew.Teile Wasser wurden gründlich gemischt. Die Mischung wurde durch eine Zweistoffdüse versprüht. Als Verdüsungskomponente diente auf 4 bar vorgepreßte Luft; die gebildeten Tropfen wurden mit auf 125°C erhitzter Luft im Gleichstrom getrocknet. Das erhaltene trockene Pulver wurde mit 10 Gew% handelsüblichem Antiblockmittel (Gemisch aus Calcium-Magnesium-Carbonat und Magnesiumhydrosilikat) versetzt.

### Vergleichsbeispiel A:

Die Herstellung des Dispersionspulvers erfolgte gemäß Beispiel 1, jedoch wurde kein N-PVAl 1 eingesetzt.

### Beispiel 2:

4000 Gew.Teile Vinnapas-Dispersion LL 2, 1600 Gew.Teile Polyviol M 13/140 als 10 %-ige Lösung in Wasser (8 % auf LL 2 Harz), 10 Gew.Teile Agitan 305 (0,5 % auf LL 2 Harz), 600 Gew.Teile N-PVAl 1 als 10 %-ige Lösung in Wasser (3 % auf LL 2 Harz) und 500 Gew.Teile Wasser wurden gründlich gemischt. Die Mischung wurde durch eine Zweistoffdüse versprüht. Als Verdüsungskomponente diente auf 4 bar vorgepreßte Luft; die gebildeten Tropfen wurden mit auf 125°C erhitzter Luft im Gleichstrom getrocknet. Das erhaltene trockene Pulver wurde mit 10 Gew% handelsüblichem Antiblockmittel (Gemisch aus Calcium-Magnesium-Carbonat und Magnesiumhydrosilikat) versetzt.

### Vergleichsbeispiel B:

Die Herstellung des Dispersionspulvers erfolgte gemäß Beispiel 2, jedoch wurde kein N-PVAl 1 eingesetzt.

### Beispiel 3:

Es wurde wie in Beispiel 2 gearbeitet, doch statt 600 Gew.Teilen N-PVAl 1 als 10 %-ige Lösung in Wasser (3 % auf LL 2 Harz) wurden 800 Gew.Teile N-PVAl 2 als 10 %-ige Lösung in Wasser (4 % auf LL 1 Harz) eingesetzt.

### Vergleichsbeispiel C:

Es wurde wie in Beispiel 2 gearbeitet, doch statt 600 Gew.Teilen N-PVAl 1 als 10 %-ige Lösung in Wasser (3 % auf LL 2 Harz) wurden 800 Gew.Teile Polyviol G 04/140 3 als 10 %-ige Lösung in Wasser (4 % auf LL 1 Harz) eingesetzt.

### Beispiel 4:

Es wurde wie in Beispiel 2 gearbeitet, doch statt 600 Gew.Teilen N-PVAl 1 als 10 %-ige Lösung in Wasser (3 % auf LL 2 Harz) wurden 800 Gew.Teile N-PVAl 3 als 10 %-ige Lösung in Wasser (4 % auf LL 2 Harz) eingesetzt.

### Beispiel 5:

Es wurde wie in Beispiel 2 gearbeitet, doch statt 600 Gew.Teilen N-PVAl 1 als 10 %-ige Lösung in Wasser (3 % auf LL 2 Harz) wurden 800 Gew.Teile N-PVAl 4 als 10 %-ige Lösung in Wasser (4 % auf LL 2 Harz) eingesetzt.

### Beispiel 6:

Es wurde wie in Beispiel 2 gearbeitet, doch statt 600 Gew.Teilen N-PVAl 1 als 10 %-ige Lösung in Wasser (3 % auf LL 2 Harz) wurden 800 Gew.Teile N-PVAl 5 als 10 %-ige Lösung in Wasser (4 % auf LL 2 Harz) eingesetzt.

### Beispiel 7:

Es wurde wie in Beispiel 2 gearbeitet, doch statt 600 Gew.Teilen N-PVAl 1 als 10 %-ige Lösung in Wasser (3 % auf LL 2 Harz) wurden 1600 Gew.Teile N-PVAl 3 als 10 %-ige Lösung in Wasser (8 % auf LL 2 Harz) eingesetzt.

### Beispiel 8:

Es wurde wie in Beispiel 2 gearbeitet, doch statt 600 Gew.Teilen N-PVAl 1 als 10 %-ige Lösung in Wasser (3 % auf LL 2 Harz) wurden 400 Gew.Teile N-PVAl 3 als 10 %-ige Lösung in Wasser (2 % auf LL 2 Harz) eingesetzt.

### Beispiel 9:

Es wurde wie in Beispiel 2 gearbeitet, doch statt 600 Gew.Teilen N-PVAl 1 als 10 %-ige Lösung in Wasser (3 % auf LL 2 Harz) wurden 800 Gew.Teile N-PVAl 6 als 10 %-ige Lösung in Wasser (4 % auf LL 2 Harz) eingesetzt.

### Beispiel 10:

Es wurde wie in Beispiel 2 gearbeitet, doch statt 600 Gew.Teilen N-PVAl 1 als 10 %-ige Lösung in Wasser (3 % auf LL 2 Harz) wurden 800 Gew.Teile N-PVAl 7 als 10 %-ige Lösung in Wasser (4 % auf LL 2 Harz) eingesetzt.

### Beispiel 11:

4000 Gew.Teile Vinnapas-Dispersion LL 3, 1600 Gew.Teile Polyviol M 13/140 als 10 %-ige Lösung in Wasser (8 % auf LL 3 Harz), 10 Gew.Teile Agitan 305 (0,5% auf LL 2 Harz), 320 Gew.Teile PME als 25 %-ige Lösung und 800 Gew.Teile N-PVAl 6 als 10 %-ige Lösung in Wasser (4 % auf LL 2 Harz) und 500 Gew.Teile Wasser wurden gründlich gemischt. Die Mischung wurde durch eine Zweistoffdüse versprüht. Als Verdüsungskomponente diente auf 4 bar vorgepreßte Luft; die gebildeten Tropfen wurden mit auf 125°C erhitzter Luft im Gleichstrom getrocknet. Das erhaltene trockene Pulver wurde mit 10 Gew% handelsüblichem Antiblockmittel (Gemisch aus Calcium-Magnesium-Carbonat und Magnesiumhydrosilikat) versetzt.

### Beispiel 12:

Es wurde wie in Beispiel 11 gearbeitet, doch statt N-PVAl 6 wurde N-PVAl 7 eingesetzt.

### Beispiel 13:

Es wurde wie in Beispiel 11 gearbeitet, doch es wurde zusätzlich statt N-PVAl 6 N-PVAl 7 eingesetzt.

### Vergleichsbeispiel D:

Es wurde wie in Beispiel 9 gearbeitet, doch es wurde kein N-PVAl 6 eingesetzt.

### Anwendungstechnische Prüfung:

### Haftzugprüfung:

### Geräte:

Mörtelmischer Fa. Toni nach DIN EN 196 T1,
Betongehwegplatten B550 40x40 cm,
Traufel,
Schablone 4 mm,
Bohrmaschine mit Bohrkrone ϑ 55 mm,
Zweikomponenten-Kleber Stabilit Ultra Fa. Henkel,
Abzugskrampen ϑ 55 mm, Schichtdicke 5 mm,
Herionabzugsgerät nach DIN 18156 T1.

### Rezeptur:

DIN-Mörtel nach DIN 1164:
900 g Portlandzement PZ 35F,
2700 g Normsand = 2 Beutel,
10,8 g Agitan P801 Fa. Münzing (0,3 %),
90 g Dispersionspulver,
405 g Wasser.

### Durchführung:

Die Rezepturbestandteile werden 3 Minuten trocken auf Stufe 1 im Mörtelmischer gemischt. Nach Zugabe des Wassers mischte man 3 Minuten im Mörtelmischer auf Stufe 1. Dann wurde der Mörtel mit der Traufel und mit Hilfe der Schablone in 4 mm Schichtstärke auf, bei 23°C / 50 % relative Feuchtigkeit klimatisierte, Betongehwegplatten aufgezogen. Die Platten wurden dann entsprechend gelagert (28 d Normklima 23°C / 50 % r.F.).
Einen Tag vor Prüftermin wurden pro Platte 6 Probekörper ausgebohrt und darauf die runden Abzugskrampen mit dem 2K-Kleber aufgeklebt.

Die Probenkörper wurden dann mit dem Abzugsgerät von Herion mit einer Laststeigerungsrate von 250 N/sec abgezogen.

Die Ergebnisse der anwendungstechnischen Prüfung sind in Tabelle 1 zusammengefaßt:
Es werden Mittelwert und Standardabweichung angegeben.
Die Menge des Dispersionspulvers wird in Gew.Teilen auf Zement bezogen angegeben. (Kunststoff-Zementfaktor KZ; KZ = 0,1 bedeutet 10 Gew% Dispersionspulver auf eingesetzte Zementmenge).
Da die Zementqualität schwankt, können nur Werte innerhalb einer Serie verglichen werden.

**Tabelle 1**

| Dispersionspulver | KZ | Haftzugfestigkeit 28 d NK [N/mm²] |
|---|---|---|
| Serie 1 | | |
| Beispiel 1 | 0,1 | 2,06±0,04 |
| Vergleichsbsp. A | 0,1 | 1,86±0,08 |
| Beispiel 2 | 0,1 | 2,12±0,10 |
| Vergleichsbsp. B | 0,1 | 1,83±0,10 |

| Serie 2 | | |
|---|---|---|
| Beispiel 3 | 0,1 | 1,78±0,04 |
| Beispiel 4 | 0,1 | 1,78±0,05 |
| Beispiel 5 | 0,1 | 1,73±0,04 |
| Beispiel 6 | 0,1 | 1,74±0,06 |
| Vergleichsbsp. C | 0,1 | 1,60±0,07 |

| Serie 3 | | |
|---|---|---|
| Vergleichsbsp. C | 0,1 | 1,61±0,05 |
| Beispiel 7 | 0,1 | 1,85±0,04 |
| Beispiel 8 | 0,1 | 1,75±0,06 |
| Beispiel 9 | 0,1 | 1,90±0,04 |
| Beispiel 10 | 0,1 | 1,86±0,11 |

| Serie 4 | | |
|---|---|---|
| Vergleichsbsp. D | 0,1 | 1,85±0,06 |
| Beispiel 11 | 0,1 | 2,10±0,07 |
| Beispiel 12 | 0,1 | 2,22±0,03 |
| Beispiel 13 | 0,1 | 2,14±0,06 |

## Patentansprüche

1. Redispergierbare Dispersionspulverzusammensetzung enthaltend
a) ein Basispolymerisat aus der Gruppe der Vinylester-Polymerisate, Styrol-Polymerisate, Acrylat-Polymerisate und Vinylchlorid-Polymerisate,
b) 2 bis 15 Gew%, bezogen auf das Basispolymerisat, Polyvinylalkohol mit einem Hydrolysegrad von 85 bis 95 Mol% und einer Höppler-Viskosität, bestimmt in 4%-iger Lösung, von 2 bis 25 mPa.s,
c) 3 bis 30 Gew%, bezogen auf das Gesamtgewicht polymerer Bestandteile, feines Antiblockmittel, und
d) 1 bis 15 Gew%, bezogen auf das Basispolymerisat, kaltwasserlöslichen, aminofunktionellen Polyvinylalkohol mit einer Höppler-Viskosität von 1 bis 20 mPa.s und einer Verseifungszahl von 0 bis 250, welcher aminofunktionelle Vinyleinheiten der Formel CH₂=CH-(CH₂)ₓ-NH₂ mit x = 0 bis 4 enthält.

2. Redispergierbare Dispersionspulverzusammensetzung nach Anspruch 1, dadurch gekennzeichnet, daß als Basispolymerisat a) ein Polymerisat aus der Gruppe der Vinylacetat-Homopolymere, Vinylacetat-Ethylen-Copolymere oder Copolymere von Vinylestern von gesättigten C₃- bis C₈-Alkylcarbonsäuren und Ethylen, mit einem Ethylengehalt von 1 bis 40 Gew% Ethylen und 0 bis 40 Gew% weiterer Vinylester aus der Gruppe der Vinylester von gesättigten C₃- bis C₈-Alkylcarbonsäuren und/oder Vinylchlorid, oder Styrol-Acrylate wie Styrol-Butylacrylat oder Styrol-Ethylhexylacrylat mit einem Styrolgehalt von 1 bis 70 Gew% enthalten ist.

3. Redispergierbare Dispersionspulverzusammensetzung nach Anspruch 1 oder 2, dadurch gekennzeichnet, daß als kaltwasserlöslicher, aminofunktioneller Polyvinylalkohol d) ein Polymer verwendet wird, mit einem Gehalt an Monomereinheiten entsprechend:
0 bis 20 Mol% Vinylacetat,
35 bis 95 Mol% Vinylalkohol,
1 bis 15 Mol% aminofunktionelle Monomer der Formel CH₂=CH-(CH₂)ₓ-NH₂ mit x = 0 bis 4
0 bis 30 Mol% 1-Methylvinylalkohol und
0 bis 5 Mol% 1-Methylvinylacetat.

4. Redispergierbare Dispersionspulverzusammensetzung nach Anspruch 1 oder 2, dadurch gekennzeichnet, daß als kaltwasserlöslicher, aminofunktioneller Polyvinylalkohol d) ein Polymer verwendet wird enthaltend
0,1 bis 15 Mol% Vinylacetat,
70 bis 95 Mol% Vinylalkohol,
2 bis 10 Mol% aminofunktionelle Vinyleinheiten der Formel CH₂=CH-(CH₂)ₓ-NH₂ mit x = 1,
2 bis 20 Mol% 1-Methylvinylalkohol und
0,01 bis 3,0 Mol% 1-Methylvinylacetat.

5. Redispergierbare Dispersionspulverzusammensetzung nach Anspruch 1 bis 4, dadurch gekennzeichnet, daß noch bis 10 Gew%, bezogen auf das Basispolymerisat, eines vollverseiften Copolymers aus 1-Alkylvinylester mit C₁- bis C₄-Alkylgruppen und Vinylester, mit einer Höppler-Viskosität von 1 bis 25 mPa.s, bestimmt in 4%-iger Lösung, enthalten sind.

6. Redispergierbare Dispersionspulverzusammensetzung nach Anspruch 1 bis 5, dadurch gekennzeichnet, daß noch bis 30 Gew%, bezogen auf das Basispolymerisat, Zementverflüssiger wie sulfonatgruppenhaltige Kondensationsprodukte aus Melamin oder Keton und Formaldehyd und/oder Naphtalinsulfonsäure-Formaldehyd- und/oder Phenolsulfonat-Formaldehyd-Kondensationsprodukte,
und/oder
bis 2 Gew%, bezogen auf das Basispolymerisat, oberflächenaktive Substanz(en) wie Emulgatoren oder Netzmittel und/oder
bis 3 Gew%, bezogen auf das Basispolymerisat, Verdickungsmittel wie Polyacrylsäure
und/oder
bis 2 Gew%, bezogen auf das Basispolymerisat, Entschäumer enthalten sind.

7. Verwendung der redispergierbaren Dispersionspulver-Zusammensetzung nach einem der obigen Ansprüche in Baustoffen wie Fliesenkleber, Spachtelmassen, Gipsbaustoffen, Kalkmörteln, Zementmörteln, Putzen und Trockenmörteln.

8. Verwendung der redispergierbaren Dispersionspulver-Zusammensetzung nach einem der obigen Ansprüche in Klebstoffzusammensetzungen und Anstrichfarben.

## Claims

1. Redispersible dispersion powder composition comprising
a) a base polymer selected from the group consisting of vinyl ester polymers, styrene polymers, acrylate polymers and vinyl chloride polymers,
b) from 2 to 15% by weight, based on the base polymer, of polyvinyl alcohol having a degree of hydrolysis of from 85 to 95 mol % and a Höppler viscosity, determined in a 4% solution, of from 2 to 25 mPa.s,
c) from 3 to 30% by weight, based on the total weight of polymeric components, of fine antiblock agent, and
d) from 1 to 15% by weight, based on the base polymer, of aminofunctional polyvinyl alcohol soluble in cold water and having a Höppler viscosity of from 1 to 20 mPa.s and a saponification number of from 0 to 250, which comprises aminofunctional vinyl units of the formula CH₂=CH-(CH₂)ₓ-NH₂ with x = 0 to 4.

2. Redispersible dispersion powder composition according to Claim 1, characterized in that the base polymer a) present is a polymer selected from the group consisting of vinyl acetate homopolymers, vinyl acetate/ethylene copolymers or copolymers of vinyl esters of saturated C₃- to C₈-alkylcarboxylic acids and ethylene, having an ethylene content of from 1 to 40% by weight of ethylene and from 0 to 40% by weight of further vinyl esters selected from the group consisting of the vinyl esters of saturated C₃- to C₈-alkylcarboxylic acids and/or vinyl chloride, or styrene/acrylates such as styrene/butyl acrylate or styrene/ethylhexyl acrylate having a styrene content of from 1 to 70% by weight.

3. Redispersible dispersion powder composition according to Claim 1 or 2, characterized in that the aminofunctional polyvinyl alcohol soluble in cold water d) which is used is a polymer having a content of momomer units corresponding to:
from 0 to 20 mol % of vinyl acetate,
from 35 to 95 mol % of vinyl alcohol,
from 1 to 15 mol % of aminofunctional monomers of the formula CH₂=CH-(CH₂)ₓ-NH₂ with x = 0 to 4,
from 0 to 30 mol % of 1-methylvinyl alcohol and
from 0 to 5 mol % of 1-methylvinyl acetate.

4. Redispersible dispersion powder composition according to Claim 1 or 2, characterized in that the aminofunctional polyvinyl alcohol soluble in cold water d) which is used is a polymer comprising
from 0.1 to 15 mol % of vinyl acetate,
from 70 to 95 mol % of vinyl alcohol,
from 2 to 10 mol % of aminofunctional vinyl units of the formula CH₂=CH-(CH₂)ₓ-NH₂ with x = 1,
from 2 to 20 mol % of 1-methylvinyl alcohol and
from 0.01 to 3.0 mol % of 1-methylvinyl acetate.

5. Redispersible dispersion powder composition according to Claims 1 to 4, characterized in that up to 10% by weight, based on the base polymer, of a fully saponified copolymer of 1-alkylvinyl ester having C₁- to C₄-alkyl groups and vinyl ester, having a Höppler viscosity of from 1 to 25 mPa.s, determined in 4% solution, are additionally present.

6. Redispersible dispersion powder composition according to Claims 1 to 5, characterized in that up to 30% by weight, based on the base polymer, of cement fluidizers such as sulphonate-containing condensation products of melamine or ketone and formaldehyde and/or naphthalenesulphonic acid/formaldehyde and/or phenolsulphonate/formaldehyde condensation products,
and/or
up to 2% by weight, based on the base polymer, of surface active substance(s) such as emulsifiers or wetting agents and/or
up to 3% by weight, based on the base polymer, of thickener such as polyacrylic acid
and/or
up to 2% by weight, based on the base polymer, of antifoaming agent
are additionally present.

7. Use of the redispersible dispersion powder composition according to any of the above claims in building materials such as tile adhesives, knifing fillers, gypsum building materials, lime mortars, cement mortars, rendering and dry mortars.

8. Use of the redispersible dispersion powder composition according to any of the above claims in adhesive compositions and paints.

## Revendications

1. Composition pouvant être redispersée de poudre dispersante contenant :
a) un polymère de base choisi parmi le groupe des polymères d'ester vinylique, polymères du styrène, polymères d'acrylate et polymères du chlorure de vinyle,
b) 2 à 15% en poids, sur base du polymère de base, d'un poly(alcool vinylique) avec un taux hydroxyle de 85 à 95% en moles et une viscosité Höppler, déterminée sur une solution à 4%, de 2 à 25 mPa.s,
c) 3 à 30% en poids, sur base de la quantité pondérale totale de polymères, d'un agent antibloquant fin, et
d) 1 à 15% en poids, sur base du polymère de base, d'un poly(alcool vinylique) à fonction amino, soluble dans l'eau froide, avec une viscosité Höppler de 1 à 20 mPa.s et un indice de saponification de 0 à 250, qui contient des unités vinyle à fonction amino de formule CH₂=CH-(CH₂)ₓ-NH₂ avec x = 0 à 4.

2. Composition pouvant être redispersée de poudre dispersante suivant la revendication 1, caractérisée en ce qu'elle contient, en tant que polymère de base a), un polymère choisi parmi le groupe des homopolymères acétate de vinyle, des copolymères acétate de vinyle-éthylène ou des copolymères d'esters vinyliques d'acides alcoylcarboxyliques saturés en C₃ à C₈, et d'éthylène, avec une teneur en éthylène de 1 à 40% en poids d'éthylène et de 0 à 40% en poids d'un autre ester vinylique parmi le groupe des esters vinyliques d'acides alcoylcarboxyliques saturés en C₃ à C₈ et/ou de chlorure de vinyle, ou styrène-acrylate tels que styrène-acrylate de butyle ou styrène-acrylate d'éthylhexyle, avec une teneur en styrène de 1 à 70% en poids.

3. Composition pouvant être redispersée de poudre dispersante suivant la revendication 1 ou 2, caractérisée en ce qu'on utilise comme poly(alcool vinylique) à fonction amino, soluble dans l'eau froide d), un polymère avec une teneur en unités monomères correspondant à :
0 à 20% en moles d'acétate de vinyle,
35 à 95% en moles d'alcool vinylique,
1 à 15% en moles de monomères à fonction amino de formule CH₂=CH-(CH₂)ₓ-NH₂ avec x = 0 à 4
0 à 30% en moles de 1-méthylvinylalcool, et
0 à 5% en moles d'acétate de 1-méthylvinyle.

4. Composition pouvant être redispersée de poudre dispersante suivant la revendication 1 ou 2, caractérisée en ce qu'on utilise comme poly(alcool vinylique) à fonction amino, soluble dans l'eau froide d), un polymère contenant :
0,1 à 15% en moles d'acétate de vinyle,
70 à 95% en moles d'alcool vinylique,
2 à 10% en moles d'unités vinyliques à fonction amino de formule CH₂=CH-(CH₂)ₓ-NH₂ avec x = 1,
2 à 20% en moles de 1-méthylvinylalcool, et
0,01 à 3,0% en moles d'acétate de 1-méthylvinyle.

5. Composition pouvant être redispersée de poudre dispersante suivant les revendications 1 à 4, caractérisée en ce qu'elle contient encore jusqu'à 10% en poids, sur base du polymère de base, d'un copolymère complètement saponifié d'ester 1-alcoylvinylique avec des radicaux alcoyle en C₁ à C₄ et d'ester vinylique, avec une viscosité Höppler de 1 à 25 mPa.s, déterminée sur une solution à 4%.

6. Composition pouvant être redispersée de poudre dispersante suivant les revendications 1 à 5, caractérisée en ce qu'elle contient encore jusqu'à 30% en poids, sur base du polymère de base, d'un liquéfacteur de ciment tel que le produit de condensation contenant des radicaux sulfonate de mélamine ou d'une cétone et de formaldéhyde et/ou des produits de condensation acide naphtaline-sulfonique-formaldéhyde et/ou phénolsulfonate-formaldéhyde, et/ou
jusqu'à 2% en poids, sur base du polymère de base, d'une ou de plusieurs substances tensioactives telles que les émulsionnants ou les agents gélifiants, et/ou
jusqu'à 3% en poids, sur base du polymère de base, d'un agent épaississant tel que le poly(acide acrylique), et/ou
jusqu'à 2% en poids, sur base du polymère de base, d'un démoussant.

7. Utilisation de la composition pouvant être redispersée de poudre dispersante suivant l'une quelconque des revendications précédentes, dans les matériaux de construction tels que la colle de carrelage, les masses à étaler, les matériaux de construction à base de plâtre, les mortiers de chaux, les mortiers de ciment, les enduits et les mortiers secs.

8. Utilisation de la composition pouvant être redispersée de poudre dispersante suivant l'une quelconque des revendications précédentes dans les compositions collantes et les peintures.
